(19) Europäisches Patentamt
European Patent Office
Office européen des brevets

(11) **EP 2 045 699 A2**

(12) **EUROPEAN PATENT APPLICATION**

(43) Date of publication:
**08.04.2009 Bulletin 2009/15**

(51) Int Cl.:
***G06F 3/048*** (2006.01)

(21) Application number: **08016628.3**

(22) Date of filing: **22.09.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (71) Applicant: **Kabushiki Kaisha Toshiba**<br>**Minato-ku,**<br>**Tokyo 105-8001 (JP)** |
| (30) Priority: **04.10.2007 JP 2007261273** | (72) Inventor: **Tonouchi, Yojiro**<br>**Tokyo 105-8001 (JP)**<br><br>(74) Representative: **HOFFMANN EITLE**<br>**Patent- und Rechtsanwälte**<br>**Arabellastrasse 4**<br>**81925 München (DE)** |

(54) **Gesture determination apparatus and method**

(57) A gesture determination apparatus, determines (2), every time a point coordinate is input in time sequence from an input unit, whether an input locus, which is formed from point coordinates input before the point coordinate is input and the point coordinate input from the input unit, satisfies a feature of a locus of a gesture stored in a storage unit, to output an identification information of the gesture when the input locus satisfies the feature of the locus of the gesture, determines (3), every time the point coordinate is input, whether point coordinates input during predetermined time before the point coordinate is input and the point coordinate input from the input unit are in a standstill state within a predetermined distance, and determines (4) a repeat of the gesture when the standstill state is determined after the one of the gestures is determined, to output the identification information of the gesture.

FIG. 3

**Description**

The present invention relates to a gesture determination apparatus for determining a gesture based on the locus thereof.

An electronic device such as a computer or portable phone operated by a finger or a pen has a gesture determination function of receiving a stroke (e.g., handwriting) representing the locus of a gesture by a finger or a pen and determining a corresponding gesture based on information such as shape, direction, and size of the input stroke. The gesture determination function allows the electronic device to input a command such as pointer movement, cursor movement, character deletion, or insertion of a space or a line return in accordance with the type of the determined gesture. Normally, these commands are continuously repeatedly input. However, the conventional gesture determination apparatus is inconvenient for continuous input.

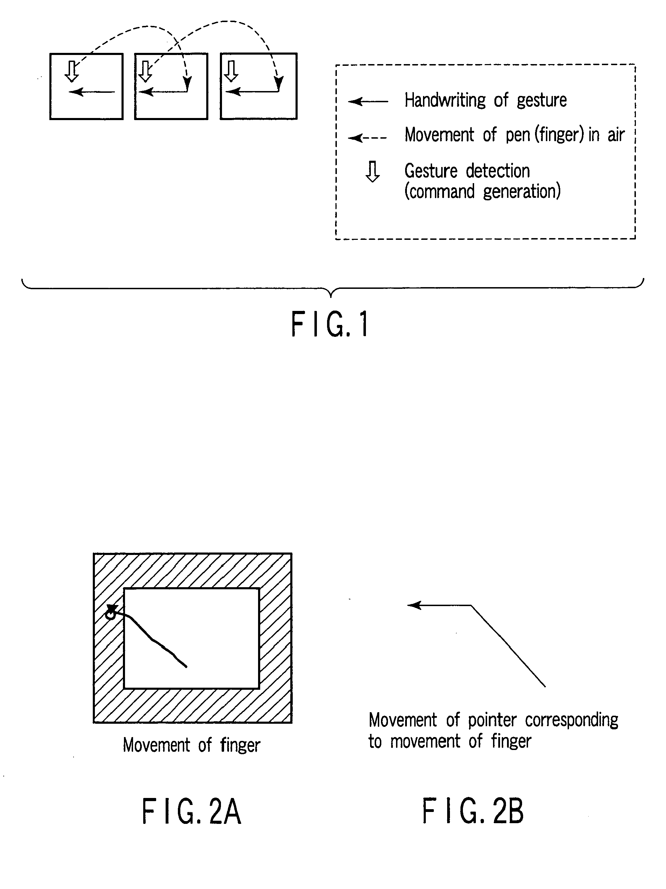

In, for example, JP-A 2002-203208 (KOKAI), gesture determination is necessary for each stroke. Hence, a user must repeatedly input gestures of the same shape many times, as shown in FIG. 1.

A circular gesture disclosed in JP-A H9-230993 (KOKAI) allows a user to continuously input commands an infinite number of times. However, since only two command types (i.e., clockwise and counterclockwise commands) are used, the circular gesture is unsuitable for inputting commands of three types or more.

With an edge motion function disclosed in JP-A 2004-94964 (KOKAI), even when a finger has reached an edge of a touch pad, a pointer continuously moves until the user moves the finger off. This allows the user to continuously move the pointer even when the finger has reached an edge of the touch pad. This function does not determine that the finger is standing still but determines that the finger is located at the edge of the touch pad and executes a special pointer movement process. Additionally, a series of operations of moving a finger from the central portion to an edge of the touch pad sometimes fails to continuously input the same pointer movement command. For example, the pointer moves toward the upper left corner, as shown in FIG. 2A. When the finger has reached the left edge, the pointer moves to the left as shown in FIG. 2B.

As described above, conventionally, it is not easy to repeatedly input the same gesture because the shape of a stroke representing the locus of a gesture or the repetitive number is limited.

The present invention has been made in consideration of the above-described problems, and has as its object to allow a user to easily repeatedly input the same gesture without limiting the shape of a stroke representing the locus of a gesture or the repetitive number.

According to embodiments of the present invention, a gesture determination apparatus includes a storage unit to store, for each gesture of a plurality of gestures, a feature of a locus necessary for determining the gesture and identification information of the gesture;

determines, every time a point coordinate is input in time sequence from a input unit, whether an input locus, which is formed from point coordinates which are input before the point coordinate is input and the point coordinate input from the input unit, satisfies the feature of the locus of one of the gestures stored in the storage unit, to output the identification information of the one of the gestures when the input locus satisfies the feature of the locus of the one of the gestures;

determines, every time the point coordinate is input, whether a set of a plurality of point coordinates including point coordinates which are input during predetermined time before the point coordinate is input and the point coordinate input from the input unit are in a standstill state within a predetermined distance; and

determines a repeat of the one of the gestures when the standstill state is determined after the one of the gestures is determined, to output the identification information of the one of the gestures.

The invention can be more fully understood from the following detailed description when taken in conjunction with the accompanying drawings, in which:

FIG. 1 is a view for explaining a conventional gesture determination method;

FIGS. 2A and 2B are views for explaining a conventional gesture determination method;

FIG. 3 is a block diagram showing an exemplary arrangement of a determination unit to which a gesture determination apparatus according to an embodiment is applied, and an exemplary arrangement of an overall portable information terminal apparatus using the determination unit;

FIG. 4 is a flowchart for explaining the outline of the process operation of the determination unit shown in FIG. 3;

FIG. 5 is a view showing the loci (strokes) of eight gestures corresponding to cursor moving operations in eight directions;

FIG. 6 is a flowchart for explaining the process operation of a gesture determination unit;

FIG. 7 is a flowchart for explaining the process operations of a standstill determination unit and a gesture repeat determination unit;

FIGS. 8A and 8B are views showing detailed exemplary loci determined as a gesture repeat;

FIG. 9 is a view showing a gesture repeat determination area on a position coordinate detection plane; and

FIG. 10 is a view showing exemplary gesture codes and the corresponding commands stored in a second storage unit shown in FIG. 3.

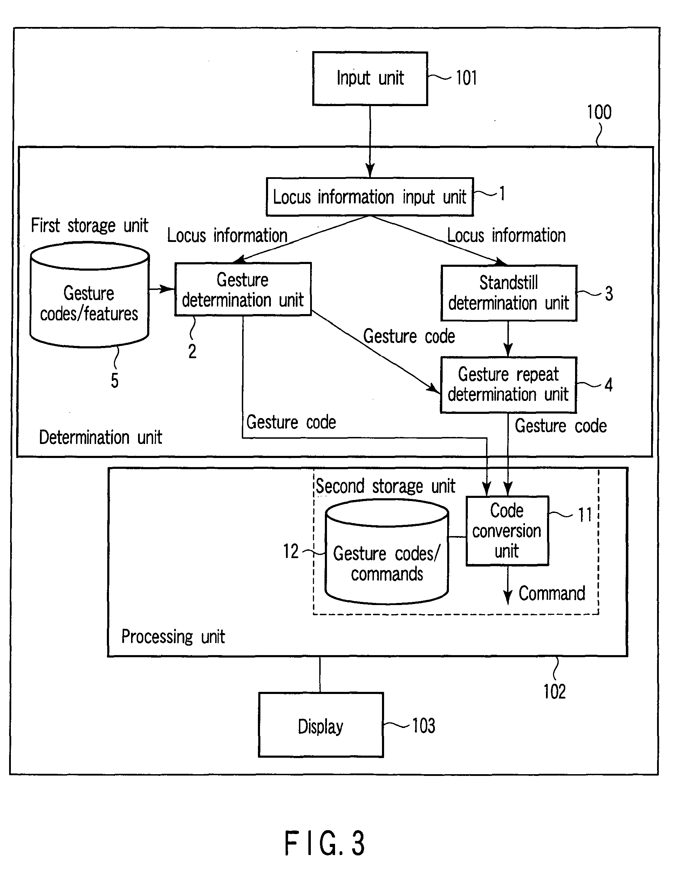

FIG. 3 shows a portable information terminal apparatus such as a PDA or a tablet PC operated by a finger or a pen. The portable information terminal apparatus shown in FIG. 3 roughly includes a determination unit 100, an input unit 101 such as a tablet or a touch panel having, for example, a position coordinate detection plane (e.g., tablet plane) for detecting time-series coordinate data representing the locus of a gesture by a pen or a finger, a processing unit 102 which receives the identification information (gesture code) of the gesture determined by the determination unit 100 and executes a command corresponding to the gesture code, and a display 103.

The determination unit 100 includes a locus information input unit 1, a gesture determination unit 2, a standstill determination unit 3, a gesture repeat determination unit 4, and a first storage unit 5.

The input unit 101 detects coordinate data in time sequence (i.e., time-series coordinate data representing the locus (stroke or handwriting) of a gesture input by a user using a pen or a finger) and inputs the data to the locus information input unit 1 of the determination unit 100.

In this case, the input unit 101 detects, for example, a point coordinate representing the handwriting of a pen or a finger on the tablet at a predetermined time interval and inputs the point coordinate to the locus information input unit 1 of the determination unit 100.

Coordinate data representing a handwriting can be expressed as time-series data given by

$P1(X[1],Y[1]),...,Pi(X[i],Y[i]),...,Pk(X[k],Y[k])$,

where Pi is a writing point on the coordinate input plane of the input unit 101, and X[i] and Y[i] are the X- and Y-coordinates of Pi. The locus (i.e., the handwriting (stroke) of a gesture) is represented by strokes at a predetermined interval. Each point coordinate represents the position of a pen point or a fingertip at each time. In the following explanation, the positive direction of Y-coordinates is set downward, and the positive direction of X-coordinates is set rightward.

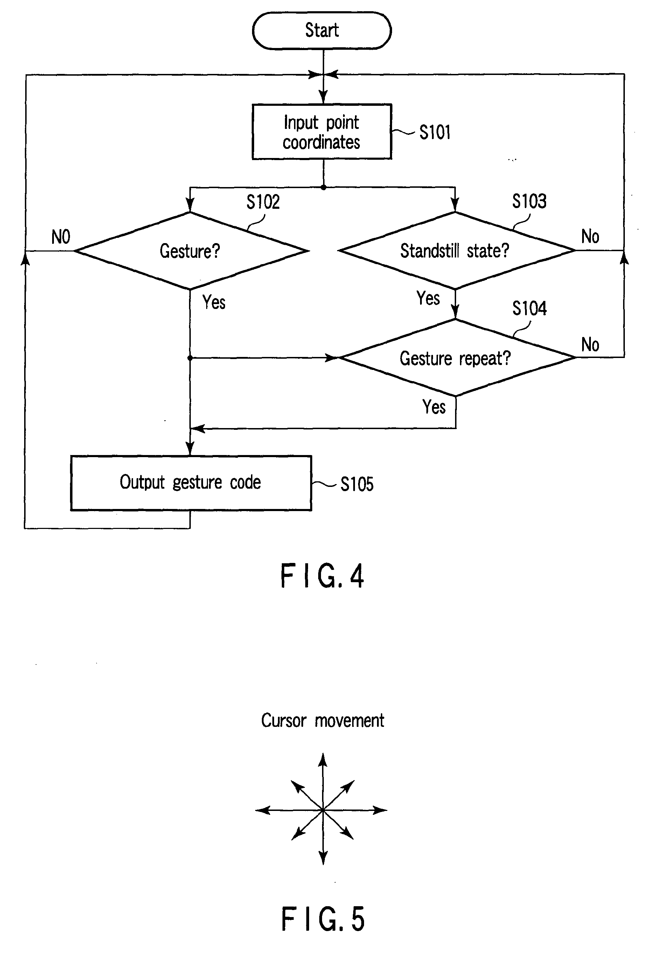

The outline of the process operation of the determination unit 100 shown in FIG. 3 will be described next with reference to the flowchart in FIG. 4.

The input unit 101 detects the coordinates of writing points representing the locus of a gesture by a pen point or a fingertip and inputs them to the locus information input unit 1 at a predetermined time interval (step S101).

Every time the coordinates of a writing point are input, the gesture determination unit 2 determines, based on features such as the direction, length, and shape of the input locus (input stroke) formed from the input writing point and previously input writing points, whether the input stroke indicates a gesture (step S102). Upon determining that the input stroke indicates a gesture, the gesture determination unit 2 outputs identification information representing the type of the gesture (i.e., a gesture code) to the processing unit 102 (step S105). The determination result of the gesture determination unit 2 is also output to the gesture repeat determination unit 4 at the time interval of writing point coordinate input. Even when the gesture determination unit 2 determines that the input stroke does not indicate a gesture, information representing the gesture can be output to the gesture repeat determination unit 4.

The first storage unit 5 stores, for each of a plurality of different gestures,' features of an input stroke (e.g., the conditions of the direction, length, and shape of an input stroke) necessary for determining the gesture, and identification information (gesture code) of the gesture.

Every time a writing point is input, the gesture determination unit 2 compares the direction, length, and shape of the input stroke formed from the input writing point and previously input writing points with the features of each gesture stored in the first storage unit 5, thereby checking whether the input stroke satisfies the features of any one of the gestures. When the input stroke satisfies the features of any one of the gestures stored in the first storage unit 5, the gesture determination unit 2 determines that the input stroke indicates the gesture and outputs the code of the gesture.

Every time the coordinates of a writing point are input at a predetermined time interval, the standstill determination unit 3 also determines whether the input stroke is in a standstill state at the input time (step S103). The standstill state indicates a state in which an input writing point is standing still within a predetermined distance for a predetermined time (T) or more.

Every time the coordinates of a writing point are input at a predetermined time interval, the gesture repeat determination unit 4 determines, based on the determination result of the standstill determination unit 3 and that of the gesture determination unit 2, whether repeat of the gesture determined by the gesture determination unit 2 before the current time is instructed. More specifically, when the input stroke is in the standstill state, and the gesture determination unit 2 has already determined the gesture before the input time, the gesture repeat determination unit 4 determines to repeat the last one of the plurality of gestures determined by the gesture determination unit 2 before the input time (step S104).

If the gesture repeat determination unit 4 determines to repeat the gesture in step S104, the process advances to step S105 to output, to the processing unit 102, the identification information (gesture code) of the last one of the plurality of gestures determined by the gesture determination unit 2 before the input time.

The above-described process in steps S101 to S105 is executed every time the coordinates of a writing point are input to the locus information input unit 1.

A description will be made below by exemplifying determining gestures corresponding to the commands of cursor moving operations of moving a mouse pointer or a cursor in eight directions (i.e., upward, downward, leftward, rightward, and toward the upper right, low right, upper left, and lower left corners).

FIG. 5 shows the loci (strokes) of eight gestures corresponding to the cursor moving operations in the eight directions. Each of the cursor moving operations in the eight directions is assigned to a gesture for drawing a locus in a required cursor moving direction.

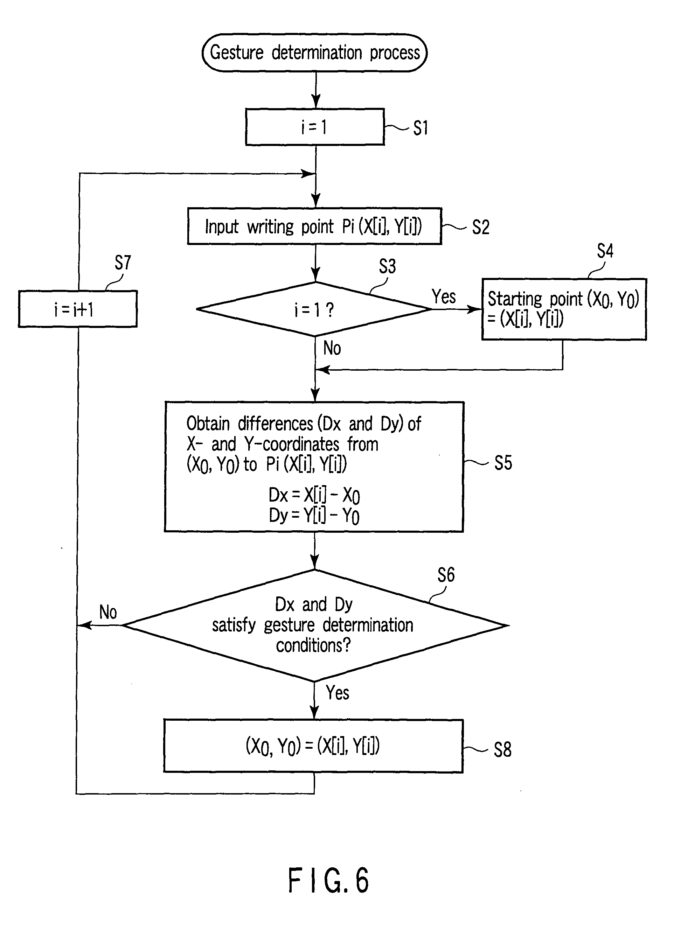

Using the exemplary gestures in the eight directions, the process operation of the gesture determination unit 2 (steps S102 and S105 in FIG. 4) when the writing point Pi(X[i],Y[i]) is input will be described with reference to the flowchart in FIG. 6. Note that a time i is expressed as the number of a writing point detected at a predetermined time interval after the touch of the pen point or fingertip on the position coordinate detection plane of the input unit 101 is detected until the pen point or fingertip is moved off.

The time when the touch of the pen point or fingertip on the input plane of the input unit 101 is detected is set as time i = 1 (step S1).

The coordinate data Pi(X[i],Y[i]) = P1(X[1],Y[1]) of a writing point detected by the input unit 101 when the pen point or fingertip has touched the position coordinate detection plane thereof is input to the locus information input unit 1 (step S2). At this time, the time i is "1" (step S3). Hence, the process advances to step S4 to set the writing point to the starting point $(X_0,Y_0)$ of an input stroke for determining a gesture. That is, $(X_0,Y_0) = (X[1],Y[1])$ (step S4).

The process advances to step S5 to obtain differences Dx and Dy of the X- and Y-coordinates of the input stroke from the starting point $(X_0,Y_0)$ to the input writing point Pi(X[i],Y[i]).

$$Dx = X[i] - X_0$$

$$Dy = Y[i] - Y_0$$

Then, the process advances to step S6. If Dx and Dy satisfy the features of any one of the gestures stored in the first storage unit 5, and the input stroke is determined as a gesture, the identification information of the gesture is output to the processing unit 102 and the gesture repeat determination unit 4 as the gesture determination result at the time i. Then, the process advances to step S8.

If Dx and Dy do not satisfy any features of the gestures stored in the first storage unit 5, the input stroke is not determined as a gesture at the time i, and the process advances to step S7. Note that the gesture determination result representing that the input stroke is not determined as a gesture at the time i may be output to the gesture repeat determination unit 4.

Since the current time i is "1", and the input stroke is not determined as a gesture, the process advances from step S6 to step S7.

When the next writing point input time i = 2 in step S7, the process returns to step S2 to input coordinate data P2(X[2],Y[2]) of the second writing point. The process advances to step S3. In step S3, the time i is "2". The process advances to step S5 to obtain the differences Dx and Dy of the X- and Y-coordinates of the input stroke from the starting point $(X_0,Y_0)$ to the writing point P2. The process advances to step S6. If the input stroke is not determined as a gesture based on Dx and Dy, the process advances to step S7. Then, steps S2 to S6 are repeated.

At time i = k, a writing point Pk(X[k],Y[k]) is input (steps S1 and S2). The process advances from step S3 to step S5 to obtain the differences Dx and Dy of the X- and Y-coordinates of the input stroke from the starting point $(X_0,Y_0) = (X[1],Y[1])$ to the writing point Pk.

In step S6, it is checked whether Dx and Dy satisfy the features of any one of the gestures stored in the first storage unit 5.

The first storage unit 5 stores, in advance, the features such as the direction and length of an input stroke (the conditions of an input stroke) necessary for determining the gesture in correspondence with each of the following gestures.

The positive direction of Y-coordinates is set downward, and the positive direction of X-coordinates is set rightward here. H is a predetermined threshold value for gesture determination. The gesture is given by

up gesture for -Dy > H,
down gesture for Dy > H,
left gesture for -Dx > H,
right gesture for Dx > H,

upper right gesture for

$$\sqrt{2/2}\,(Dx - Dy) > H,$$

lower right gesture for

$$\sqrt{2/2}\,(Dx + Dy) > H,$$

lower left gesture for

$$\sqrt{2/2}\,(-Dx + Dy) > H,$$

upper left gesture for

$$\sqrt{2/2}\,(-Dx - Dy) > H.$$

In step S6, Dx and Dy of the input stroke from the starting point $(X_0,Y_0)$ to the writing point Pk are compared with the conditions corresponding to the respective gestures stored in the first storage unit 5, and a gesture whose conditions are satisfied by Dx and Dy of the input stroke are searched for.

If Dx and Dy of the input stroke satisfy the conditions of only one gesture, the input stroke is determined as the gesture. The identification information of the gesture is output to the processing unit 102 and the gesture repeat determination unit 4 as the gesture determination result at time k. Then, the process advances to step S8.

If Dx and Dy of the input stroke satisfy the conditions of a plurality of gestures, one of the plurality of gestures, whose conditions have the highest satisfaction level for Dx and Dy of the input stroke, is selected and obtained as the determination result. For example, in the above conditions, a gesture whose left-hand side has the maximum value is selected.

In step S8, the starting point $(X_0,Y_0)$ of the input stroke for determining a gesture is updated to the coordinate data of the writing point Pk. More specifically, $(X_0,Y_0) = (X[k],Y[k])$ (step S8). After that, the process advances to step S7 and then to step S2 to input coordinate data Pk+1(X[k+1],Y[k+1]) of the next writing point (at time i = k+1).

From then on, the process in steps S2 to S8 is repeated every time the writing point Pi is input at a predetermined time interval until the pen point or fingertip moves off the input plane to finish the input of one stroke.

When the pen point or fingertip has moved off the input plane to finish the input of one stroke, the touch of the pen point or fingertip on the input plane of the input unit 101 is detected again, and the input of other stroke starts, the process starts from step S1.

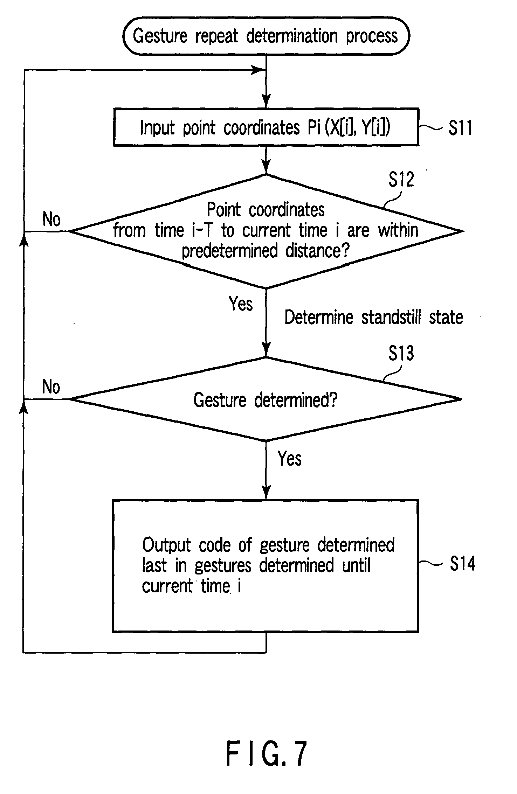

The gesture repeat determination process (steps S103, S104, and S105 in FIG. 4) executed by the standstill determination unit 3 and the gesture repeat determination unit 4 will be described next with reference to FIG. 7.

Every time the locus information input unit 1 inputs a writing point, the standstill determination unit 3 determines whether the handwriting is in the standstill state at the input time. More specifically, when the writing point Pi is input via the locus information input unit 1 at the time i (step S11), the standstill determination unit 3 determines whether the handwriting is in the standstill state at the input time i (step S12).

For example, the standstill determination unit 3 determines that the handwriting is in the standstill state at the time i under a condition that

the coordinates of the writing point are within a predetermined distance from a time i-T to the time i. That is,

when all values k and l that satisfy i - T <= k, and l <= i satisfy

$|X[k]-X[l]|<Sx, |Y[k]-Y[l]|<Sy$,

the standstill determination unit 3 determines that the handwriting is in the standstill state at the time i. In this case, Sx and Sy are x- and y-direction threshold values for determining the standstill state, and T is a predetermined time for determining the standstill state (i.e., a standstill time).

If the standstill determination unit 3 determines in step S12 that the handwriting is in the standstill state at the time i, the process advances to step S13. Otherwise (if the above condition is not satisfied), the process returns to step S11 to execute the process of the next writing point.

In step S13, the gesture repeat determination unit 4 determines, using the standstill determination result of the standstill determination unit 3 and the gesture determination result of the gesture determination unit 2, whether repeat of the gesture is instructed at the time i (i.e., whether to repeat the gesture).

Gesture repeat indicates regarding an input stroke as the same gesture as that determined immediately before and outputting the gesture code of the gesture.

When the standstill determination unit 3 determines that the input stroke is in the standstill state at the time i (gesture repeat determination condition 1), and the gesture determination unit 2 has already determined the gesture before the time i (e.g., during the time i = 1 to i) (gesture repeat determination condition 2), the gesture repeat determination unit 4 determines to execute gesture repeat by repeating the last one of the plurality of gestures determined by the gesture determination unit 2 before the time i. That is to say, the gesture repeat determination unit 4 determines the repeat of the gesture which is determined immediately before the standstill state is determined by the standstill determination unit 3.

If the gesture repeat determination unit 4 determines in step S13 to execute gesture repeat at the time i, the process advances to step S14 to output, to the processing unit 102, the identification information (gesture code) of the last one of the plurality of gestures determined by the gesture determination unit 2 before the time i.

If it is determined in step S13 that the gesture determination unit 2 has not determined any gesture before the time i (e.g., during the time i = 1 to i), the process returns to step S11.

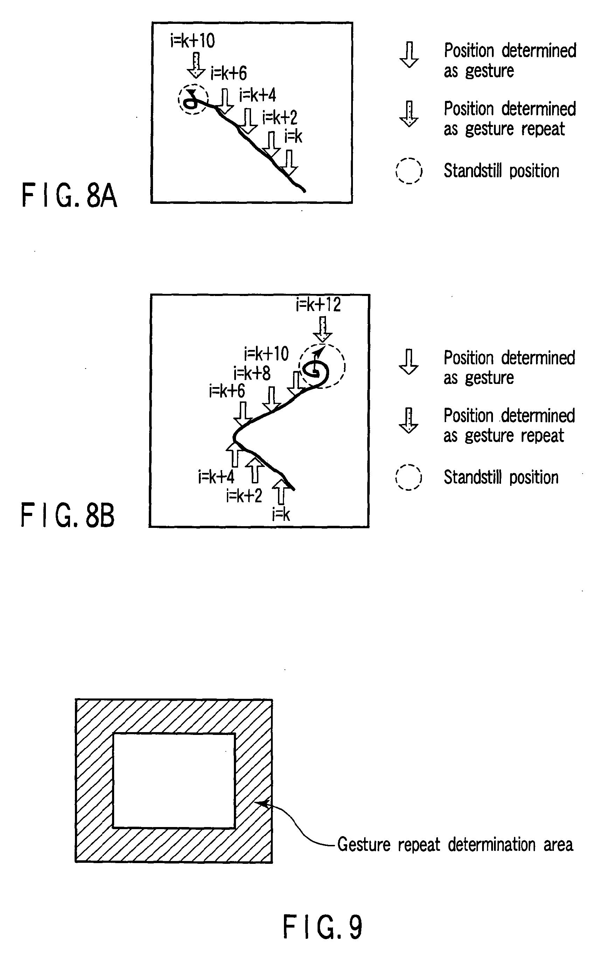

Assume that the user inputs a locus shown in FIG. 8A on the position coordinate detection plane of the input unit 101. In FIG. 8A, when writing points are input at times i = k, k + 2, k + 4, and k + 6, the handwriting is determined as an upper left gesture by the process in FIG. 6. Then, the standstill state is determined at i = k + 10, and gesture repeat is determined by the process shown in FIG. 7. Since the upper left gesture is determined immediately before i = k + 10, gesture repeat for repeating the upper left gesture is determined from i = k + 10 while the standstill state is being determined.

Assume that the user inputs a locus shown in FIG. 8B on the position coordinate detection plane of the input unit 101. In FIG. 8B, when writing points are input at times i = k, k + 2, and k + 4, the handwriting is determined as an upper left gesture by the process in FIG. 6. When writing points are input at times i = k + 6, k + 8, and k + 10, the handwriting is determined as an upper right gesture. Then, the standstill state is determined at i = k + 12, and gesture repeat is determined by the process shown in FIG. 7. Since the upper right gesture is determined immediately before i = k + 12, gesture repeat for repeating the upper right gesture is determined from i = k + 12 while the standstill state is being determined.

A gesture repeat determination area may be provided on the position coordinate detection plane (handwriting input area) such as the tablet plane of the locus information input unit 1, as shown in FIG. 9. In FIG. 9, the gesture repeat determination area is provided at the peripheral portion (hatched portion in FIG. 9) of the position coordinate detection plane. However, the present invention is not limited to this. The gesture repeat determination area may be provided at the center of the position coordinate detection plane, at the peripheral portions of the left and right sides, at the peripheral portion of the upper side, or at the peripheral portion of the lower side. The gesture repeat determination area can be provided at any part of the position coordinate detection plane.

When the gesture repeat determination area is provided, to determine gesture repeat at the time i, in addition to the above-described gesture repeat determination conditions (i.e., (gesture repeat determination condition 1) and (gesture repeat determination condition 2), the third gesture repeat determination condition that the coordinates of all writing points input from the time i-T to the time i, or some of them (e.g., writing points input at the time i) are within the gesture repeat determination area is necessary. More specifically, the following (gesture repeat determination condition 3) is added.

(Gesture repeat determination condition 3) The coordinates (X[i],Y[i]) at the time i are within the gesture repeat determination area.

A writing point stands still in a small area for a predetermined time (standstill time T) or more not only for gesture repeat but also due to simple hesitation in writing.

When the gesture repeat determination area is provided, and the (gesture repeat determination condition 3) is added, the gesture repeat determination unit can accurately determine whether the standstill state has occurred for gesture repeat or due to simple hesitation in writing.

As described above, a code conversion unit 11 of the processing unit 102 converts the gesture code output from the gesture determination unit 2 or the gesture repeat determination unit 4 of the determination unit 100 into a command corresponding to the gesture code.

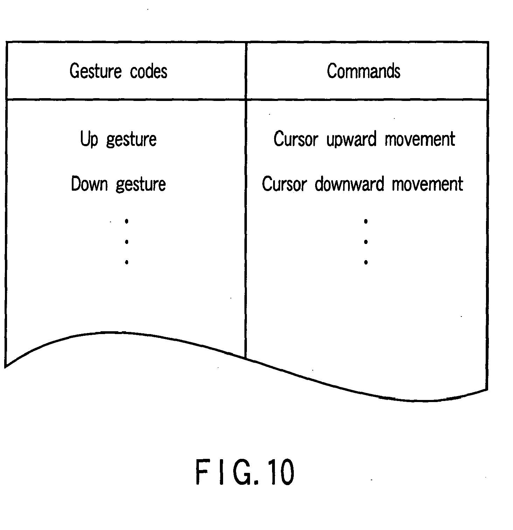

A second storage unit 12 of the processing unit 102 stores gesture codes and the corresponding commands to be related to each other as shown in FIG. 10.

The code conversion unit 11 searches the second storage unit 12 for a command corresponding to the gesture code output from the determination unit 100 and outputs the obtained command in the processing unit 102. The processing unit 102 displays a process result based on the command on the display 103. As a result, when the determination unit 100 outputs a gesture code indicating, for example, "up gesture", the cursor displayed on the display 103 moves up on the screen.

If an upper left gesture is continuously determined, and then, gesture repeat is determined, the cursor displayed on the display 103 moves toward the upper left corner on the screen continuously during that time.

The determination unit 100 may include the code conversion unit 11 and the second storage unit 12 so that the code conversion unit 11 converts the gesture code output from the gesture determination unit 2 or the gesture repeat determination unit 4 into a command and outputs the command to the processing unit 102.

As described above, according to the above embodiment, after a pen point or fingertip touches the position coordinate detection plane of the input unit 101, and the coordinates of the starting point of one stroke are detected, every time time-series point coordinates representing the locus of a gesture of one stroke are input until the pen point or fingertip moves off the position coordinate detection plane, the gesture determination unit 2 compares the feature amount of the input locus (input stroke) formed from the input point coordinates and previously input point coordinates with the features of each gesture locus stored in the first storage unit 5. When the feature amount of the input locus satisfies the features of any one locus of the plurality of gestures stored in the first storage unit 5, the gesture is determined as a gesture corresponding to the input locus, and the identification information of the gesture is output.

On the other hand, every time point coordinates are input, the standstill determination unit 3 determines whether a standstill state has occurred, in which a plurality of point coordinates including the input point coordinates and those which are input from the time of the point coordinate input to a predetermined time are standing still within a predetermined distance. When the standstill state is determined, and a gesture has been determined before that time, the gesture repeat determination unit 4 determines to repeat the gesture (gesture repeat) and outputs the identification information of the gesture.

When one gesture is made by inputting one stroke to the input unit 101, the gesture can be determined at a plurality of stages halfway in the stroke. It is therefore possible to input (identical or a plurality of different) gestures a plurality of number of times continuously during the writing of one stroke. Hence, identical or a plurality of different commands can be input continuously. Additionally, when the writing point is made to stand still at one point for a predetermined time (standstill time T), a command corresponding to the gesture determined immediately before can be input repeatedly many times (during the time when the writing point is standing still).

According to the embodiment, it is possible to implement a gesture repeat function of allowing a user to easily continuously repeatedly instruct an operation (command) such as cursor movement or one character deletion which is often performed continuously.

In the above embodiment, the features of the locus of each gesture stored in the first storage means include the conditions of the direction, length, and the like of an input stroke necessary for determining a gesture. However, the present invention is not limited to this, and an input stroke pattern may be used.

In the above embodiment, the shape of a stroke is not limited, and a gesture can be determined from a stroke independently of the shape thereof. A gesture can be determined even at a plurality of stages during a stroke. Hence, a gesture can be recognized independently of the shape thereof if point coordinates representing the locus can be acquired at a predetermined time interval.

As described above, according to the present invention, after a gesture is determined at least once halfway during writing of one stroke, the writing point is made to stand still at one point for a predetermined time (standstill time T). This allows the user to instruct repeat of the gesture determined immediately before. It is therefore possible to easily continuously input commands by a gesture that inputs one stroke without limiting the repetitive number.

The method of the present invention (the functions of the units of the determination unit 100) described in the embodiment of the present invention can be stored in a computer readable medium such as a magnetic disk (e.g., flexible disk or hard disk), an optical disk (e.g., CD-ROM or DVD), or a semiconductor memory and distributed as a program to be executed by a computer.

**Claims**

1. A gesture determination apparatus **characterized by** comprising:

   a storage unit (5) to store, for each gesture of a plurality of gestures, a feature of a locus necessary for determining the gesture and identification information of the gesture;
   a gesture determination unit (2) configured to determine, every time a point coordinate is input in time sequence from a input unit, whether an input locus, whish is formed from point coordinates which are input before the point coordinate is input and the point coordinate input from the input unit, satisfies the feature of the locus of one of the gestures stored in the storage unit, to output the identification information of the one of the gestures when the input locus satisfies the feature of the locus of the one of the gestures;
   a standstill determination unit (3) configured to determine, every time the point coordinate is input, whether a set of a plurality of point coordinates including point coordinates which are input during predetermined time before the point coordinate is input and the point coordinate input from the input unit are in a standstill state within a predetermined distance; and
   a gesture repeat determination unit (4) configured to determine a repeat of the one of the gestures when the standstill state is determined after the one of the gestures is determined, to output the identification information of the one of the gestures.

2. The apparatus according to claim 1, **characterized in that** the gesture repeat determination unit determines the repeat of the one of the gestures which is determined immediately before the standstill state is determined.

3. The apparatus according to claim 1, **characterized in that**

   the input unit inputs the point coordinate detected on a position coordinate detection plane thereof, and
   the gesture repeat determination unit determines the repeat of the one of the gestures when all or some of the set of the point coordinates are standing still within a predetermined area of the position coordinate detection plane.

4. The apparatus according to claim 3, **characterized in that** the area is provided at a peripheral portion of the position coordinate detection plane.

5. The apparatus according to claim 1, **characterized in that** the feature of the locus of each gesture stored in the storage unit is a condition necessary for determining the gesture.

6. The gesture determination method **characterized by** comprising:

   storing, for each gesture of a plurality of gestures, a feature of a locus necessary for determining the gesture and an identification information of the gesture in a storage unit;
   determining, every time a point coordinate is input in time sequence from an input unit, whether an input locus, which is formed from point coordinates which are input before the point coordinate is input and the point coordinate input from the input unit, satisfies the feature of the locus of one of the gestures stored in the storage unit, to output the identification information of the one of the gestures when the input locus satisfies the feature of the locus of the one of the gestures;
   determining, every time the point coordinate is input, whether a set of a plurality of point coordinates including point coordinates which are input during predetermined time before the point coordinate is input and the point coordinate input from the input unit are in a standstill state within a predetermined distance; and
   determining a repeat of the one of the gestures when the standstill state is determined after the one of the gestures is determined, to output the identification information of the one of the gestures.

7. The method according to claim 6, **characterized in that** determining the repeat determines the repeat of the one of the gestures which is determined immediately before the standstill state is determined.

8. The method according to claim 6, **characterized in that**

   inputting the point coordinate inputs the point coordinate detected on a position coordinate detection plane, and
   determining the repeat determines the repeat of the one of the gestures when all or some of the set of the point coordinates are standing still within a predetermined area of the position coordinate detection plane.

9. The method according to claim 8, **characterized in that** the area is provided at a peripheral portion of the position coordinate detection plane.

10. The method according to claim 6, **characterized in that** the feature of the locus of each gesture stored in the storage unit is a condition necessary for determining the gesture.

11. A program stored in a computer readable storage medium which when executed by a computer results in performance of steps **characterized by** comprising:

   storing, for each gesture of a plurality of gestures, a feature of a locus necessary for determining the gesture and an identification information of the gesture in a storage unit;
   inputting a point coordinate in time sequence;
   determining, every time a point coordinate is input in time sequence from an input unit, whether an input locus, which is formed from point coordinates which are input before the point coordinate is input and the input point coordinate input from the input unit, satisfies the feature of the locus of one of the gestures stored in the storage unit, to output the identification information of the one of the gestures when the input locus satisfies the feature of the locus of the one of the gestures;
   determining, every time the point coordinate is input, whether a set of a plurality of point coordinates including point coordinates which are input during predetermined time before the point coordinate is input and the input point coordinate input from the input unit are in a standstill state within a predetermined distance; and

determining a repeat of the one of the gestures when the standstill state is determined after the one of the gestures is determined, to output the identification information of the one of the gestures.

FIG. 1

Movement of finger

FIG. 2A

Movement of pointer corresponding
to movement of finger

FIG. 2B

Input unit ~101

100

Locus information input unit ~1

First storage unit

Locus information

Locus information

Gesture
codes/features

Gesture
determination unit

Standstill
determination unit ~3

2

Gesture code

5

Gesture repeat
determination unit ~4

Gesture code

Gesture code

Determination unit

Second storage unit

Code
conversion
unit ~11

12 ~ Gesture codes/
commands

Command

Processing unit

102

Display ~103

FIG. 3

Start

Input point coordinates — S101

S102 Gesture?
NO
Yes

S103 Standstill state?
No
Yes

S104 Gesture repeat?
No
Yes

Output gesture code — S105

**F I G. 4**

Cursor movement

**F I G. 5**

Gesture determination process

i = 1 — S1

Input writing point Pi (X[i], Y[i]) — S2

S7

i = i+1

S3

i = 1 ?

Yes

No

S4

Starting point $(X_0, Y_0)$
= (X[i], Y[i])

Obtain differences (Dx and Dy) of
X- and Y-coordinates from
$(X_0, Y_0)$ to Pi (X[i], Y[i])

$Dx = X[i] - X_0$
$Dy = Y[i] - Y_0$

— S5

S6

Dx and Dy
satisfy gesture determination
conditions?

No

Yes

$(X_0, Y_0) = (X[i], Y[i])$ — S8

FIG. 6

FIG.7

FIG. 8A

FIG. 8B

FIG. 9

| Gesture codes | Commands |
|---|---|
| Up gesture | Cursor upward movement |
| Down gesture | Cursor downward movement |
| ⋮ | ⋮ |

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002203208 A
- JP H9230993 A
- JP 2004094964 A